# EUROPEAN PATENT APPLICATION

(11) **EP 3 006 350 A1**
(43) Date of publication of application: **13.04.2016**
(21) Application number: 14425127.9
(22) Date of filing: 09.10.2014
(51) Int. Cl.: B65B 7/16, B65B 51/10, B29C 65/18

(54) **Heat sealing die with sealing pressure adjustment**

(71) Applicant: Mondini, Nazzareno, 25033 Cologne Bresciano (IT)
(72) Inventor: Mondini, Nazzareno, 25033 Cologne Bresciano (IT)

(57) **Abstract**

A heat sealer (1) and die (2) combination is implemented being produced is that maintains through time the original settings irrespective of the heat sealer (1) on which the combination is installed and the prevailing conditions at the time of starting production. Flexible devices fitted within the structure of the die (2) itself dictate the amount of force with which the two die sections (2A, 2B) press the container (3) and the lid together at the point where the heat sealing must take place.

## Description

The industrial/production environment at which the idea in question is aimed is the one in which machinery and equipment are used in the foodstuff, chemical, pharmaceutical and other sectors to hermetically seal containers with some sort of lid (whether a film in different materials or a pre-formed lid) with no risk of contamination, so as to protect the products and isolate them from potentially pollutant environments.

The sealing operation described above takes place by employing machines and equipment essentially consisting of a unit that will be referred to hereinafter as the heat sealer (1) and a unit that will be referred to hereinafter as the die (2).

Simplifying the description of the process we can say that the container/s (3) previously filled with the product to be protected is/are positioned between the two halves of the die (2A) and (2B) and placed into a special recess (2C) formed within the die itself and is/are sealed by the heat sealer on which the die is mounted by the application of a lid that is heat sealed onto the container along a well-defined line on the top edge of the container itself (heat seal area) by means of the application of heat and pressure for a specific period of time so as to fuse together the respective materials of the container and the lid.

The features that enable the seal of the film or membrane, or generally speaking the seal between the lid and the container to be classified as "well done" are as follows:
- Airtight closure
- Peelability (when required), which is understood to mean the ease with which the container can be opened at the moment of utilisation without having to make use of any kind of tool (such as scissors, blades ..) but merely tearing it open manually by pulling the tab on the lid without breaking either the container or the lid
- The visual appearance of the seal, meaning that the seal-line is the same width along its entire length and its edges are sharp and clearly defined.

In order for the unit to be deemed to be effective and reliable, the above features must obviously remain constant throughout the entire production process and must remain unchanged even if the same die is used on different heat sealing machines (something that happens very often indeed).

It is above all in this kind of situation that it becomes very difficult to obtain and maintain the same sealing results.

Similar difficulties are encountered during production changes when a heat sealing die that has not been used for quite some time is once again reinstalled on a machine.

In other words, the state of the art imposes that the sealing machine and die combination need to be fine-tuned at the start of every production run and even during the course of said runs, seeking the best values for the above-mentioned parameters (sealing force, temperature and sealing time), which frequently change from time to time, even under apparently identical operating conditions.

With the current technology, these parameters are currently set/adjusted on the heat sealer and, as previously mentioned, the parameters are highly influenced by the heat sealer on which the dies are mounted, as well as by the prevailing conditions at that specific moment in time (which are difficult to identify)

The purpose of this invention is essentially to create a heat sealer and die combination that maintains its original settings irrespective of the heat sealer (which must obviously be of the same model) on which the combination is installed and the prevailing conditions at the time of starting production.

In order to achieve this kind of result, a way was devised to incorporate everything required to guarantee the consistency and precision of the sealing force, namely the one that produced the best results during the initial and only fine tuning, over time, directly into the die itself by mechanical means, irrespective of the prevailing conditions at the time of starting a production run. Based on experience, it is in fact safe to say that sealing force is the factor that has the greatest influence on the quality of the seal and that keeping this force at a constant value results in not having to do any touch-ups (both empirically and incidentally).

It being understood that the task of the apparatus that we have called the heat sealer (1) is to convey and bring together the die carrier sections (1a) and (1b) and the two main parts of the die (2a) and 2(b) to the point of closure when, as stated, during the sealing phase the containers and lids are suitably positioned, the force with which the two die sections press the lid against the container in the area where the seal must occur (in the manner briefly described previously) is provided by flexible devices (possibly by the use of springs or pneumatic components such as pistons) incorporated into the structure of the die that, during the final part of the approach phase, are squeezed to a very precise pressure that is specific to the particular kind of die and the specific type of container and lid during the sealing phase, so that the sealing force is solely linked to the compression value of such devices, which ensures that exactly the same amount of pressure is exerted on the devices time after time, by virtue of the fact that the flexible component compression position is achieved when a mechanical limit stop is reached, cannot be exceeded and is therefore unchanging, also thanks to the excess available force supplied by the sealing machine at the point where the die halves are brought together, which is sufficient to compress various types of flexible devices with different features (specific to each die) to the set level in a totally repetitive manner.

Please see the attached diagrams in which the above-mentioned concept is illustrated and in which the simplified following phases can be identified:
1) Heat sealer without die
2) Heat sealer with die open
3) Die-sections approaching closure
4) Die-sections (container and respective lid joined)
5) Squeezing of the flexible device, which is represented by springs in this diagram (sealing)

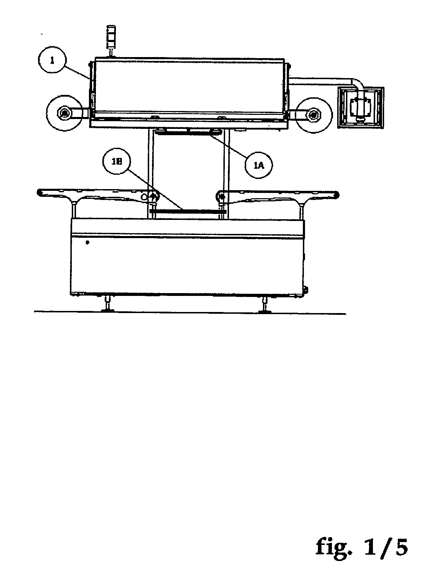

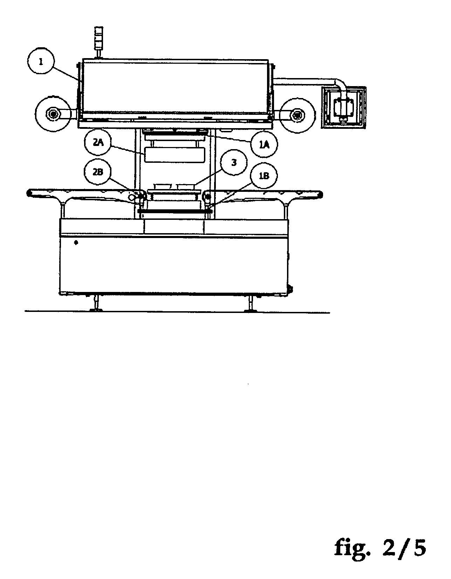

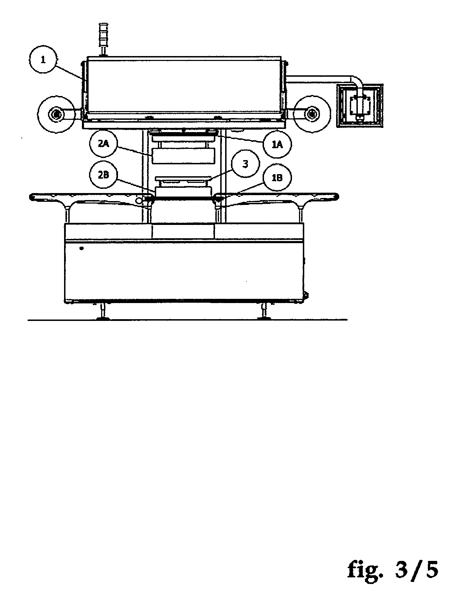

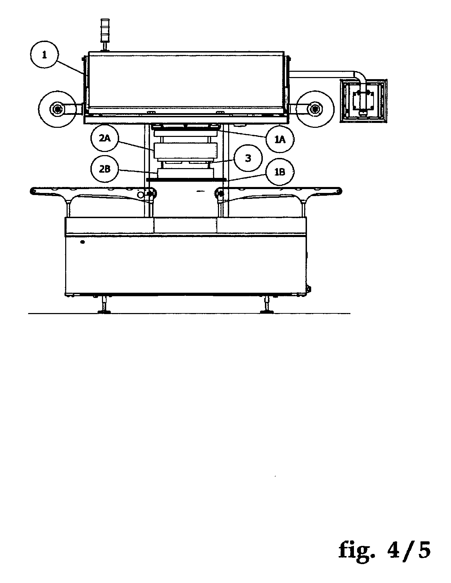

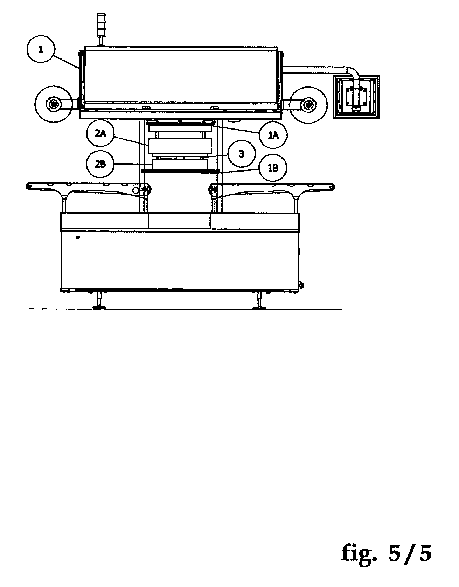

## Claims

1. The following feature claims relate to a mechanical system in which everything required in order to guarantee the consistency and precision of the sealing force over time has been incorporated into the die itself. Said force is provided by flexible devices, springs or pneumatic piston-like parts incorporated into the structure of the die that, during the final part of the approach phase, are squeezed to a very precise pressure that is typical for the specific kind of die so that the sealing force is solely linked to the compression value of such devices, which ensures that exactly the same amount of pressure is exerted on the devices time after time, by virtue of the fact that the flexible component compression position is achieved when a mechanical limit stop is reached, cannot be exceeded and is therefore unchanging, also thanks to the excess available force sup,plied by the heat sealer at the point where the die sections are brought together, which is sufficient to compress various types of flexible devices with different features to the set level in a totally repetitive manner.
